# EUROPÄISCHE PATENTSCHRIFT

(11) **EP 1 811 851 B1**
(45) Veröffentlichungstag und Bekanntmachung des Hinweises auf die Patenterteilung: **13.08.2008**
(21) Anmeldenummer: 05813315.8
(22) Anmeldetag: 11.11.2005
(51) Int. Cl.: A22C 11/00, B26D 5/30

(54) **VERFAHREN UND VORRICHTUNG ZUM SCHNEIDEN VON WÜRSTEN**
PROCESS AND DEVICE FOR CUTTING SAUSAGE
PROCEDE ET DISPOSITIF POUR DECOUPER DES SAUCISSES

(30) Priorität: 19.11.2004 DE 102004056038
(43) Veröffentlichungstag der Anmeldung: 01.08.2007
(73) Patentinhaber: Stimpfl, Christof, 88267 Vogt (DE)
(72) Erfinder: Stimpfl, Christof, 88267 Vogt (DE)
(74) Vertreter: Weiss, Peter
(86) Internationale Anmeldenummer: PCT/EP2005/012084
(87) Internationale Veröffentlichungsnummer: WO 2006/053681

(56) Entgegenhaltungen:
- DE-A1- 3 121 432
- DE-A1- 4 307 637
- DE-A1- 4 318 301

## Beschreibung

Die Erfindung betrifft ein Verfahren zum Schneiden von Würsten von einem Wurststrang mitteßeiner Schneideinrichtung zu der die Würste am Wurststrang zusammenhängend transportiert werden und eine Trennstelle zwischen zwei aufeinander folgenden Würsten mit Hilfe einer Sensoreinrichtung erkannt wird, sowie eine Vorrichtung hierfür.

### Stand der Technik

Vorrichtungen zum Schneiden von Würsten sind in vielfältiger Form und Ausführung bekannt und auf dem Markt erhältlich. Würste werden heute so hergestellt, dass ein Darm, sei es Natur- oder Kunstdarm, mit dem entsprechenden Wurstbrät in Wurstportionen abgefüllt wird. Zwischen den einzelnen Portionen erfolgt ein Drehen des Darms und/oder ein einsetzten von Klipsen, durch welche die einzelnen Würste voneinander abgeteilt werden. Hierdurch entsteht ein Wurststrang, von dem später, beispielsweise zum automatischen Verpacken einer bestimmten Anzahl von Würsten diese Würste abgeschnitten werden müssen. Dies geschieht noch heute sehr aufwendig per Hand oder mittels Maschinen, wie sie beispielsweise in der Gattungsgebenden DE 43 18 301 A1 oder der DE 43 07 637 A1 beschrieben sind. Dabei werden die Würste an einer Schneidstelle vom Wurststrang abgetrennt, wobei die Schneidstelle vorher durch einen Sensor erkannt wird. Dies kann ein Sensor sein, wie er in der oben erwähnten DE 43 18 301 A1 beschrieben ist, jedoch sind auch andere Sensoreinrichtungen denkbar wie beispielsweise in der DD 106 131 oder der DE - OS 31 21 432 beschrieben.

Schwierigkeiten tauchen dann auf, wenn nur eine bestimmte Anzahl von Würsten von dem Wurststrang abgetrennt werden soll, die beispielsweise einer Verpackungseinrichtung zugeführt werden. Zum einen wirkt sich die absolut kontinuierliche Zuführung der Würste zu portionsweise arbeitenden Verpackungsmaschine ungünstig aus, so dass in der Regel zwischen der Schneidmaschine und der Verpackungsmaschine eine Staustrecke eingeschaltet wird. Zum anderen ist die Indexierung der Würste an dem Wurststrang nach der Sensoreinrichtung und insbesondere nach dem Durchlaufen der Schneidstelle nicht mehr korrekt, so dass es zu einem Verzug und damit zu einer Ungenauigkeit beim Schneiden kommen kann.

### Aufgabe

Der vorliegenden Erfindung liegt die Aufgabe zugrunde, ein Verfahren und eine Vorrichtung der o. g. Art zu entwickeln, mit denen eine wesentliche Verbesserung der portionsweisen Abgabe von Würsten erzielt wird.

### Lösung der Aufgabe

Die Erfindung wird in den Ansprüchen 1 und 2 definiert.

Zur Lösung der Aufgabe führt, dass nach dem Schneiden einer vorbestimmten Anzahl von Würsten der Wurststrang mit der vordersten Wurst hinter die Sensoreinrichtung zurückgezogen wird.

Dies bedeutet, dass das Erkennen der Würste insbesondere das Erkennen der Trennstelle zwischen zwei Würsten immer neu beginnt, nach dem eine bestimmte Anzahl von Würsten vom Wurststrang abgeschnitten sind. Dies hat nicht nur zur Folge, dass das Durchtrennen der Trennstelle zwischen zwei Würsten am Wurststrang wesentlich genauer durchgeführt wird, sondern durch das Rückziehen des Wurststrangs ergibt sich ein bestimmter Abstand zwischen der vordersten noch am Wurststrang verbleibenden Wurst und der letzten abgetrennten Wurst, so dass eine nachfolgende Verpackungsmaschine als Beispiel zu Aufnahme der nachfolgend Anzahl von Würsten eine neue Verpackungseinheit bereitstellen kann.

Für die Steuerung der Maschine bedeutet das neue erfindungsgemässe Verfahren keine grosse Umstellung. Es wird lediglich in jedem Fall eine Zähleinheit vorgesehen werden müssen, die aber üblicherweise auch schon bei bekannten Maschinen vorhanden ist. Ferner muss die Steuereinheit ein Signal an einen Antrieb für die Transporteinrichtung abgeben können, dass nämlich nach einer bestimmten Anzahl von abgeschnittenen Würsten die Transportrichtung umgekehrt wird. Zu diesem Zweck wird bevorzugt als Motor für die Transporteinrichtung ein Servomotor verwendet. Als Transporteinrichtung selbst bieten sich die aus dem oben erwähnten Stand der Technik bekannten Transportbänder, insbesondere als Endlosbänder ausgebildet, an.

### Figurenbeschreibung

Weitere Vorteile, Merkmale und Einzelheiten der Erfindung ergeben sich aus der nachfolgenden Beschreibung eines bevorzugten Ausführungsbeispiel anhand der Zeichnung; diese zeigt in
Figur 1 eine schematische Draufsicht auf einen Teil einer Maschine zum Schneiden von einzelnen Würsten 1 von einem Wurststrang 2, dabei sind die Würste 1 an einem Wurststrang 2 über eine Trennstelle 3 insbesondere eine Abdrehstelle miteinander verbunden;
Figur 2 eine Draufsicht auf den Bereich der Schneidmaschine gemäss Figur 1 in einer anderen Gebrauchslage.

Der Wurststrang 2 kommt beispielsweise aus einer Abfüllmaschine. In der Maschine zum Schneiden der Würste wird der Wurststrang 2 zwischen zwei Endlosbändern 4.1 und 4.2 aufgenommen, wobei zumindest einem Endlosband 4.1 bzw. einer entsprechenden Umlenkrolle 5 ein Servomotor 6 zugeordnet ist.

Geführt zwischen den beiden Endlosbändern 4.1 und 4.2 durchläuft der Wurststrang 2 eine Sensoreinrichtung 7 zum Erkennen einer Trennstelle 3, bevor bzw. eine vorderste Wurst zu einer Schneideeinrichtung 8 gelangt. Dort ist schematisch ein Schneidmesser 9 angedeutet. Mittels dieses Schneidmessers 9 wird eine vorderste Wurst von dem Wurststrang 2 getrennt, in dem die Trennstelle 3 durchschnitten wird.

Die nunmehr vereinzelten Würste 1 gelangen zwischen zwei weitere Transportbänder 10.1 und 10.2 beispielsweise zu einer Verpackungsmaschine, in welcher die Würste 1 dann einer entsprechenden Verpackung zugeführt werden;

Die Funktionsweise der vorliegenden Erfindung ist folgenden:

Der Wurststrang 2 kommt, wie oben erwähnt, beispielsweise von einer Abfüllmaschine und gelangt zwischen die beiden Endlosbänder 4.1 und 4.2. In diesen Endlosbändern 4.1 und 4.2 durchläuft der Wurststrang 2 auch die Sensoreinrichtung 7, welche die jeweilige Trennstelle 3 zwischen zwei Würsten 1 erkennt. Gleichzeitig wird die Anzahl der Würste 1 anhand der Trennstellen 3 gezählt.

Nach der Sensoreinrichtung 7 gelangt der Wurststrang 2 zur Schneideinrichtung 8, in welcher eine vorbestimmte Anzahl von Trennstellen 3 durchschnitten wird. Im vorliegenden Fall sind dies fünf Trennstellen 3, so dass auch fünf vereinzelte Würste 1 zwischen die Transportbänder 10.1 und 10.2 gelangen.

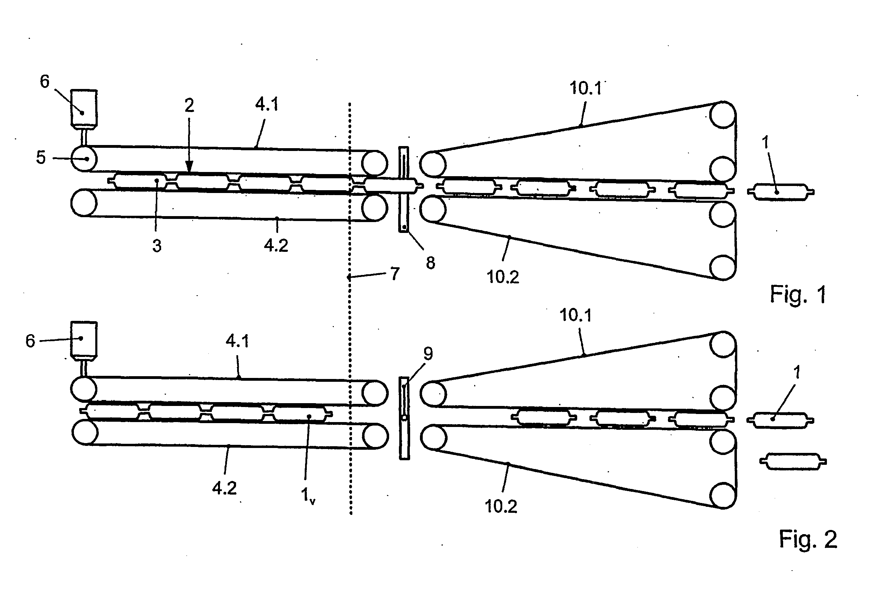

Nach dieser vorbestimmten Anzahl von abgetrennten Würsten 1 wird der Servomotor 6 umgeschaltet, so dass die Drehrichtung der Endlosbänder 4.1 und 4.2 ebenfalls umgekehrt wird. Damit wird der Wurststrang 2 zurückgezogen. Dies geschieht so lang, bis eine vorderste Wurst 1 (siehe Figur 2) hinter sie Sensoreinrichtung 7 gelangt.

Sobald von der Sensoreinrichtung 7 keine Wurst oder keine Abtrennstelle mehr erkannt wird, schaltet der Servomotor 6 die Drehrichtung wieder um, so dass die vorderste Wurst 1 wieder zur Sensoreinrichtung 7 gelangt und das vorderste Ende dieser Wurst 1 erkannt wird. Nun beginnt von neuem das Zählen und genaue Erkennen der Trennstelle zwischen den Würsten 1, bis wieder eine vorbestimmte Anzahl an Würsten 1 abgeschnitten worden ist.

### Bezugszeichenliste

| | | | | | |
|---|---|---|---|---|---|
| 1 | Wurst | 34 | | 67 | |
| 2 | Wurststrang | 35 | | 68 | |
| 3 | Trennstelle | 36 | | 69 | |
| 4 | Endlosband | 37 | | 70 | |
| 5 | Umlenkrolle | 38 | | 71 | |
| 6 | Servomotor | 39 | | 72 | |
| 7 | Sensoreinrichtung | 40 | | 73 | |
| 8 | Schneideinrichtung | 41 | | 74 | |
| 9 | Schneidmesser | 42 | | 75 | |
| 10 | Transportband | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Schneiden von Würsten (1) von einem Wurststrang (2) mittels einer Schneideinrichtung (8), zu der die Würste (1) am Wurststrang (2) zusammenhängend transportiert werden und eine Trennstelle (3) zwischen zwei aufeinanderfolgenden Würsten (1) mit Hilfe einer Sensoreinrichtung (7) erkannt wird,
**dadurch gekennzeichnet,**
**dass** nach dem Schneiden einer vorbestimmten Zahl von Würsten (1) der Wurststrang (2) mit der vordersten Wurst (1) hinter die Sensoreinrichtung (7) zurückgezogen wird.

2. Vorrichtung zum Schneiden von mittels einer Transportvorrichtung bewegten Würsten von einem Wurststrang (2) mittels einer Schneideinrichtung (8), der eine Sensoreinrichtung (7) zur Erkennung einer Trennstelle (3) zwischen zwei aufeinanderfolgenden Würsten (1) und eine Zähleinheit sowie eine Steuereinheit zugeordnet ist, **dadurch gekennzeichnet, dass** bei der verwendung die Steuereinheit ein Signal an die Transportvorrichtung gibt, wenn eine bestimmte Anzahl von Würsten (1) von der Zähleinheit gezählt sind, derart dass die Transportrichtung umgekehrt und die vordere Wurst (1) hinter die Sensoreinrichtung (7) zurückgezogen wird.

3. Vorrichtung nach Anspruch 2, **dadurch gekennzeichnet, dass** ein Antrieb (6) für den Wurststrang (2) vor der Schneideinrichtung (8) umkehrbar ist.

4. Vorrichtung nach Anspruch 2 oder 3, **dadurch gekennzeichnet, dass** die Transporteinrichtung zwei Bänder (4.1, 4.2) aufweist, zwischen denen der Wurststrang (2) transportierbar und deren Laufrichtung umkehrbar ist.

5. Vorrichtung nach Anspruch 4, **dadurch gekennzeichnet, dass** als Antrieb (6) zumindest eines Bandes (4.1) eine Servomotor dient, dessen Drehrichtung umkehrbar ist.

## Claims

1. Method of cutting sausages (1) from a string of sausages (2) by means of a cutting device (8), to which the sausages (1) linked together in the string of sausages (2) are fed and relative to which a separating point (3) between two successive sausages (1) is detected with the aid of a sensor device (7),
**characterized in**
**that**, after a predetermined number of sausages (1) has been cut, the string of sausages (2) is retracted with the leading sausage (1)- to a point behind the sensor device (7).

2. Device for cutting sausages, which are being moved by means of a conveying device, from a string of sausages (2) by means of a cutting device (8), with which are associated a sensor device (7) for detecting a separating point (3) between two successive sausages (1) as well as a counting unit and a control unit, **characterized in that** during use the control unit supplies a signal to the conveying device when a specific number of sausages (1) has been counted by the counting unit, such that the conveying device is reversed and the leading sausage (1) is retracted to a point behind the sensor device (7).

3. Device according to claim 2, **characterized in that** a drive (6) for the string of sausages (2) upstream of the cutting device (8) is reversible.

4. Device according to claim 2 or 3, **characterized in that** the conveying device comprises two belts (4.1, 4.2), between which the string of sausages (2) may be conveyed and the running direction of which may be reversed.

5. Device according to claim 4, **characterized in that** as drive (6) of at least one belt (6) a servomotor is used, the direction of rotation of which may be reversed.

## Revendications

1. Procédé pour découper des saucisses (1) d'un boudin de saucisses (2) au moyen d'un dispositif de coupe (8) vers lequel les saucisses (1) sont transportées attachées l'une à l'autre dans le boudin de saucisses (2) et dans lequel est identifié un point de séparation (3) entre deux saucisses (1) successives au moyen d'un dispositif détecteur (7),
**caractérisé par le fait que**
après la découpe d'un nombre prédéterminé de saucisses (1), le boudin de saucisses (2) est reculé avec la saucisse avant (1) derrière le dispositif détecteur (7).

2. Dispositif pour découper d'un boudin de saucisses (2) des saucisses, déplacées au moyen d'un dispositif de transport, au moyen d'un dispositif de coupe (8) auquel sont associés un dispositif détecteur (7) destiné à identifier un point de séparation (3) entre deux saucisses (1) successives et une unité de comptage ainsi qu'une unité de commande, **caractérisé par le fait que**, lors de l'utilisation, l'unité de commande transmet un signal au dispositif de transport lorsqu'il est compté un nombre déterminé de saucisses (1) par l'unité de comptage, de sorte que le dispositif de transport soit retourné et que la saucisse avant (1) soit reculée derrière le dispositif de détection (7).

3. Dispositif selon la revendication 2, **caractérisé par le fait qu'**un entraînement (6) du boudin de saucisses (2) avant le dispositif de découpe (8) est réversible.

4. Dispositif selon la revendication 2 ou 3, **caractérisé par le fait que** le dispositif de transport présente deux bandes (4.1, 4.2) entre lesquels peut être transporté le boudin de saucisses (2) et être inversé leur direction de déplacement.

5. Dispositif selon la revendication 4, **caractérisé par le fait que** comme entraînement (6) d'au moins une bande (4.1) sert un servomoteur dont le sens de rotation est réversible.
